# EUROPEAN PATENT APPLICATION

(11) **EP 2 309 170 A1**
(43) Date of publication of application: **13.04.2011**
(21) Application number: 09768713.1
(22) Date of filing: 25.06.2009
(51) Int. Cl.: F21S 8/04, F21V 8/00, F21Y 101/02, F21Y 105/00

(54) **EMBEDDED LAMP WITH AUXILIARY ILLUMINATION**

(30) Priority: 25.06.2008 CN 200820049719 U
(71) Applicant: Wu, Liangju, Foshan, Guangdong 528000 (CN)
(72) Inventor: WU, Jiechun, Foshan Guangdong 528061 (CN)
(74) Representative: De Anna, Pier Luigi
(86) International application number: PCT/CN2009/000709
(87) International publication number: WO 2009/155788

(57) **Abstract**

An embedded lamp with auxiliary illumination comprises a primary light source (10), at least one auxiliary light source (5) and a light guiding layer (1). The light guiding layer (1) is provided with a first surface (11) and a second surface (12) which are opposite. Light adjusting net points (13) are provided on the first surface of the light guiding layer (1). The auxiliary light source (5) is provided on at least one side of the light guiding layer (1). The light emitted from the auxiliary light source (5) is sent to the light guiding layer.

## Description

### FIELD OF THE INVENTION

The present invention relates to a light fixture, and in particular to a recessed light fixture with auxiliary illumination.

### BACKGROUND OF THE INVENTION

In the modem house decoration, some recessed light fixtures are usually installed in the walls of the ceiling, furniture, etc. Normally, a single light source is used in the known recessed light fixture, and the lighting effect is humdrum, which does not cater for various requirements of the modern decorative illumination. Furthermore, when different light intensity is required in different scenes, the single light source is not adapted to this situation, whereby there is a need to develop a light fixture with dual light sources or a plurality of light sources. However, if a plurality of light sources are simply added in order to meet the requirement of multiple light sources, there will be a plurality of light source focuses, and the light beams will not be soft enough, and it is of bad illumination effect and lacks a sense of beauty in appearance.

Accordingly, it is necessary to provide a recessed light fixture which has a simple structure, beautiful appearance, good lighting effect, and soft and even light beams.

### SUMMARY OF THE INVENTION

It is thus an object of the present invention to provide a recessed light fixture which has a simple structure, beautiful appearance, good decorative and lighting effect, and auxiliary illumination. With this invention, the user may select the primary illumination and/or the auxiliary illumination as desired.

To achieve the above object, the following technical solution is provided:
a recessed light fixture with auxiliary illumination comprises a primary light source, at least one auxiliary light source and a light guiding layer. The light guiding layer is provided with a first surface and a second surface which are opposite. Light adjusting net points are provided on the first surface of the light guiding layer. The auxiliary light source is provided on at least one side of the light guiding layer. The light emitted from the auxiliary light source is radiated towards the light guiding layer.

The light guiding layer is mounted on the light fixture panel, and the auxiliary light source is arranged around the primary light source. The auxiliary light source may be arranged outside the primary light source in square or circular or annular manner, and may be mounted on the front surface and/or back surface and/or outer side and/or inner side of the light fixture panel. The auxiliary light source may use one or two or more LED lamps or energy saving lamps or general illumination lamps , which are arranged into one group of auxiliary illumination or multiple groups of auxiliary illumination as desired. Furthermore, the groups of auxiliary illumination may have different colors to thus obtain a light fixture with diversified and aesthetic appearance.

The light guiding layer is made of transparent materials such as PC, polymethyl methacrylate, glass, crystal and other transparent plastics. According to the desired shape of the light fixture panel and the design of the auxiliary illumination, the light guiding layer may be a square layer or sectorial layer or annular layer.

Circular or square diffusion points, i.e. light adjusting net points, are provided on the first surface of the light guiding layer. When light is radiated to these light adjusting net points, the light will be reflected towards various directions, and then transmitted out from the second surface (the front face) of the light guiding layer. Adjusting net points with various spacing and sizes can be utilized to enable the light to be emitted evenly from the light guiding layer.

When the light travels inside the light guiding layer, the light energy adjacent to the light source is highest, and the light energy decreases as the distance from the light source increases. Therefore, in order to obtain an even lighting effect, the efficiency of light guiding should be gradually increased as the distance increases, that is to say, the area of the light adjusting net point increases as the distance from the light source increases.

The light adjusting net points can be produced by using various methods. For example, the light adjusting net points may be formed on the first surface of the light guiding layer by etching or ink printing or laser engraving.

The auxiliary light source is provided on at least one side of the light guiding layer. If desired, the auxiliary light sources may be provided on two sides of the light guiding layer which are opposite or adjacent to each other, or on three or four sides. The size of the light adjusting net points on the light guiding layer is changed according to the different arrangement of the auxiliary light sources, for example, for the auxiliary light sources on the opposite sides of the light guiding layer, the size of the light adjusting is gradually increased from the light sources on the two sides to the middle, such that the emitted light rays are even.

A light reflector is further provided outside the auxiliary light source. The light reflector has an opening facing the light guiding layer. The light rays of the auxiliary light source are reflected to the light guiding layer to improve the usage rate of the light source. The light reflector may be a reflection film or reflection mirror.

To obtain a better appearance and a simple and beautiful illumination, a light shading structure is provided outside the auxiliary light source to avoid the light rays directly emitted by the auxiliary light source from affecting the illumination effect., for example the light shading structure may be a light shading piece, a stainless steel shading cover or a piece of opaque plastics. If desired, the light shading structure may be provided on one or two or three sides of the auxiliary light source. Alternatively, the light shading piece may be designed into an annular structure with a folded edge, such that the auxiliary light source can be sheltered on two sides or above.

Preferably, the recessed light fixture with auxiliary illumination may futher includes a reflective layer. The reflective layer is provided outside the first surface of the light guiding layer. A part of the light emitted from the auxiliary light source is transmitted out of the first surface of the light guiding layer and then reflected by the reflective layer and finally transmitted out of the second surface of the light guiding layer, such that the usage efficiency of the light source is improved.

Preferably, the recessed light fixture with auxiliary illumination may futher includes a diffusion layer. The diffusion layer is provided outside the second surface of the light guiding layer to further facilitate the emitted light rays to be even.

Preferably, the recessed light fixture with auxiliary illumination may futher includes a light collecting layer. The light collecting layer is provided outside the diffusion layer to enable the diffused light rays to be transmitted out from the front surface, such that the intensity of the light emitted from the front surface is strengthened, and the use efficiency of the light source is improved.

The reflective layer, the diffusion layer and the light collecting layer may be implemented by a normal reflective film/piece, a diffusion piece and light collecting piece respectively.

A decorative layer such as polymethyl methacrylate, glass, crystal and colored glaze layer may be provided on the outmost layer of the light emergent surface of the auxiliary light source to make the light fixture more beautiful and increase the variety of light.

Reflective films or light shading films may be provided on the side of the light guiding layer, the diffusion layer and the light collecting layer to avoid the light leakage and increase the intensity of the emitted light, and thus improve the usage rate of light energy.

Comparing with the prior art, the present invention has the following advantages:
the recessed light fixture with auxiliary illumination has simple structure, beautiful appearance, good lighting effect, and soft and even light beams. This caters for the requirements in various scenes. The focuses of the auxiliary illumination will be hidden effectively, and no multiple light spots will appear. The appearance is thus concise and beautiful. The user may select the primary illumination and/or the auxiliary illumination as desired, and the auxiliary illumination may be used as an evening lamp or a decorative lamp.

### BRIEF DESCRIPTION OF THE DRAWINGS

Fig. 1 is a schematic view of a recessed light fixture with auxiliary illumination according to an embodiment of the present invention;
Fig. 2 is an enlarged view of the A area of Fig. 1;
Fig. 3 is a schematic view of the auxiliary illumination of the recessed light fixture according to an embodiment of the present invention;
Fig. 4 is a schematic view of the lamp face of the recessed light fixture according to an embodiment of the present invention;
Fig. 5 is a view showing the use state of the recessed light fixture according to an embodiment of the present invention;
Fig. 6 is a schematic view showing the principle of the light adjusting net points on the light guiding layer;
Fig. 7 is a schematic view of the light adjusting net points on the light guiding layer;
Fig. 8 is a schematic view showing the principle of the light path in the light guiding layer and the reflective layer;
Fig. 9 is a schematic view showing the principle of the light path in the light guiding layer and the diffusion layer;
Fig. 10 is an exploded side view of the light fixture with a light shading layer according to a first embodiment;
Fig. 11 is an exploded perspective view of the light fixture with the light shading layer according to the first embodiment;
Fig. 12 is an exploded side view of the light fixture with a light shading layer according to a second embodiment;
Fig. 13 is an exploded perspective view of the light fixture with the light shading layer according to the second embodiment.

### DETAILED DESCRIPTION OF THE PREFERRED EMBODIMENT

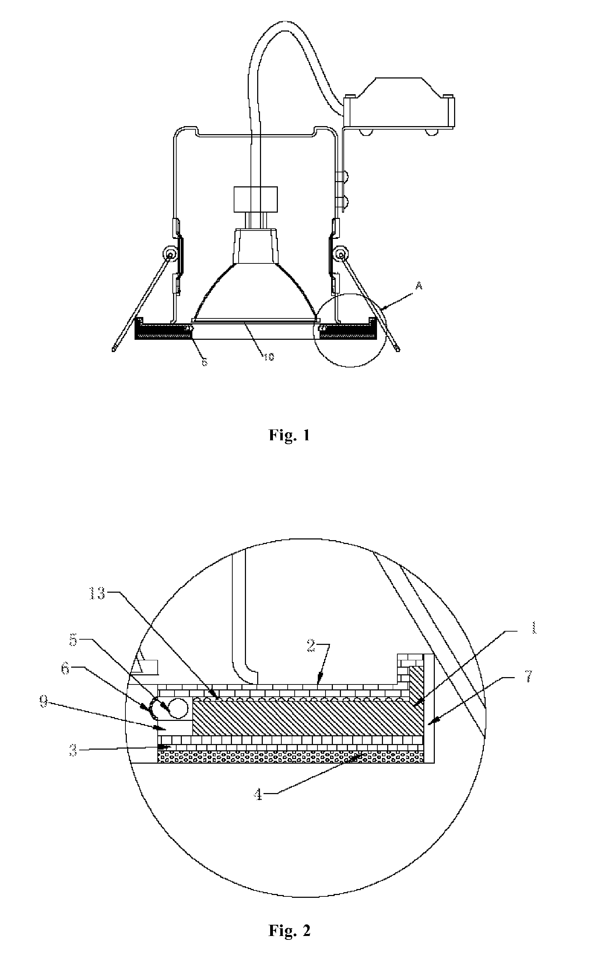

Referring to Figs. 1 to 4, the recessed light fixture with auxiliary illumination includes a primary light source 10, auxiliary light sources 5 and a light guiding layer 1. The auxiliary light sources are arranged on the side of the light guiding layer 1, and the light beams emitted from the auxiliary light source is radiated towards the light guiding layer 1. The light guiding layer 1 is made of transparent materials such as PC, polymethyl methacrylate, glass, crystal and transparent plastics. The light guiding layer 1 is provided with a first surface 11 and a second surface 12 which are opposite. Light adjusting net points 13 are provided on the first surface 11 of the light guiding layer 1.

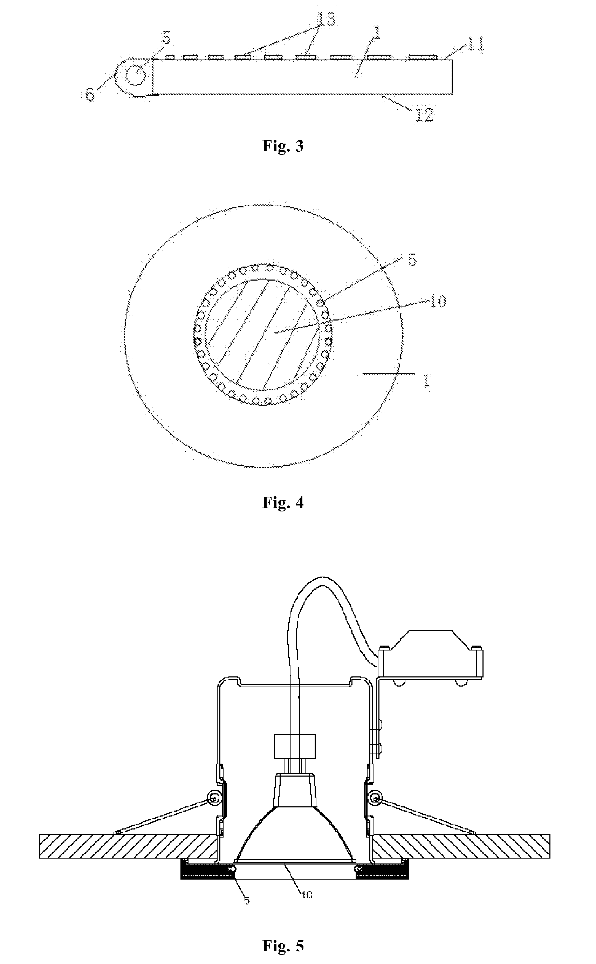

Referring to Figs. 3, 6 and 7, circular light adjusting net points 13 are provided on the first surface 11 of the light guiding layer 1. When light is radiated to these light adjusting net points 13, the light will be reflected towards various directions, and then emitted from the second surface 12 of the light guiding layer. Adjusting net points with various spacing and sizes can be utilized to enable the light to be emitted evenly from the light guiding layer. With the increasing of the distance from the light source, the area of the light adjusting net point 13 is gradually increased. When the light travels inside the light guiding layer 1, the light energy adjacent to the light source is the highest, and the light energy decreases as the distance from the light source increases. Therefore, in order to obtain an even lighting effect, the efficiency of light guiding should be gradually increased with the distance increases, that is to say, the area of the light adjusting net point 13 increases as the distance from the light source increases.

The light adjusting net points 13 can be produced by using various methods. For example, the light adjusting net points 13 may be formed on the first surface of the light guiding layer by etching or ink printing or laser engraving.

A light reflector 6 is further provided outside the auxiliary light source, as shown in Fig. 3. The light reflector 6 has an opening facing the light guiding layer.

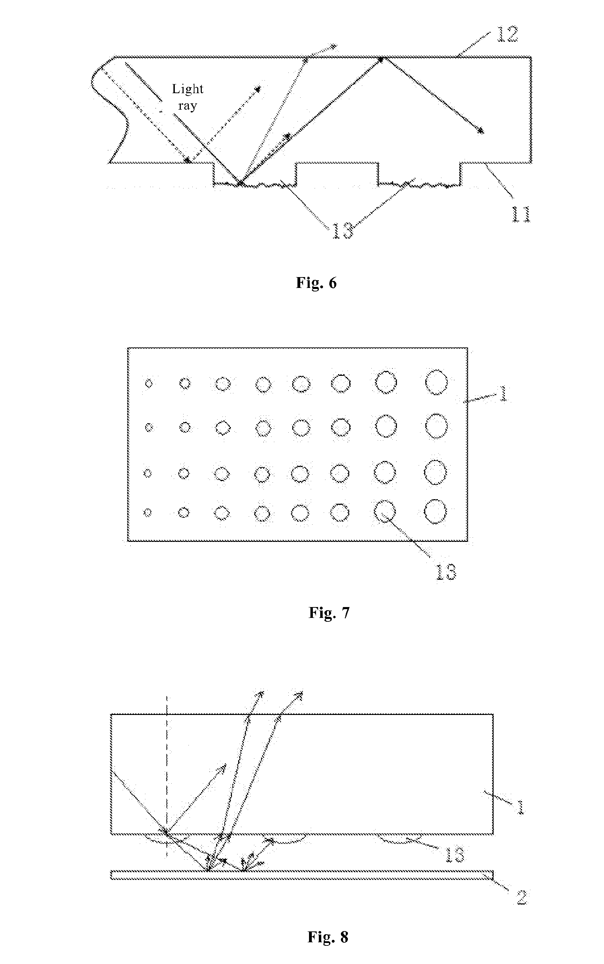

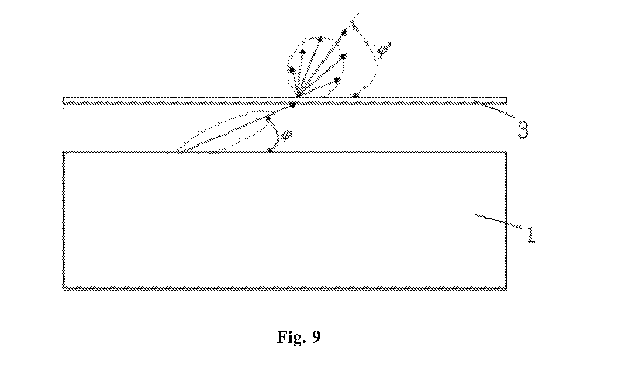

Referring to Fig. 2, the light fixture further includes a reflective layer 2, a diffusion layer 3 and a light collecting layer 4. The reflective layer is provided outside the first surface of the light guiding layer 1. A part of the light emitted from the auxiliary light source 5 is transmitted out of the first surface of the light guiding layer and then reflected by the reflective layer and finally transmitted out of the second surface of the light guiding layer, such that the use efficiency of the light source is improved, as shown in Fig. 8. The diffusion layer 3 is provided outside the second surface 12 of the light guiding layer 1 to further diffuse the emitted light rays to enable the emitted light rays to be even, as shown in Fig. 9. The light collecting layer 4 is provided outside the diffusion layer 3 to enable the diffused light rays to be transmitted out from the front, such that the intensity of the light emitted from the front is strengthened, and the use efficiency of the light source is improved. In a preferred embodiment, a light shading structure is provided outside the auxiliary light source 5, as shown in Fig. 2, a light shading piece 9 is provided outside the auxiliary light source 5 to avoid the light rays directly emitted by the LED from affecting the illumination effect.

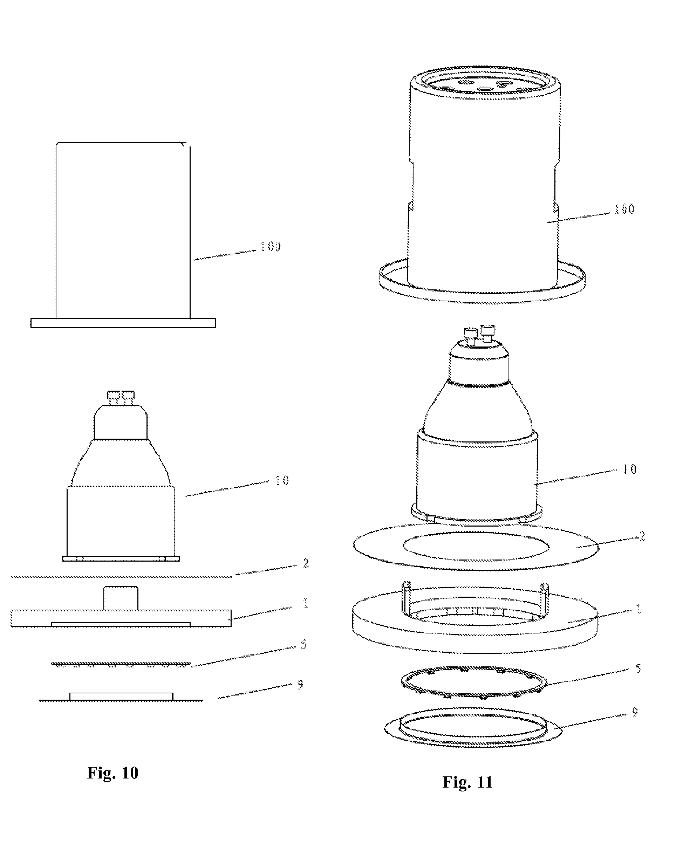

The light shading piece 9 can be implemented in different manners according to the design of the auxiliary light source and the practical application. Referring to Figs. 10 and 11, a light fixture base is indicated by 100, and a primary light source is indicated by 10. The reflective layer 2 is provided above the light guiding layer 1 to improve the use efficiency of the light source. The auxiliary light sources 5 are embedded on the inner side of the light guiding layer 1. The light shading layer 2 is provided below the light guiding layer 1. In this embodiment, the light shading piece 9 has an annular structure with an inward folded edge which encloses the inner side of the annular light guiding layer 1. The light shading piece 9 shelters the LED circuit board of the auxiliary light source 5 from two directions, i.e. the inner side and the outer surface of the light guiding layer 1, such that the light fixture is more beautiful and the light rays are more even and softer.

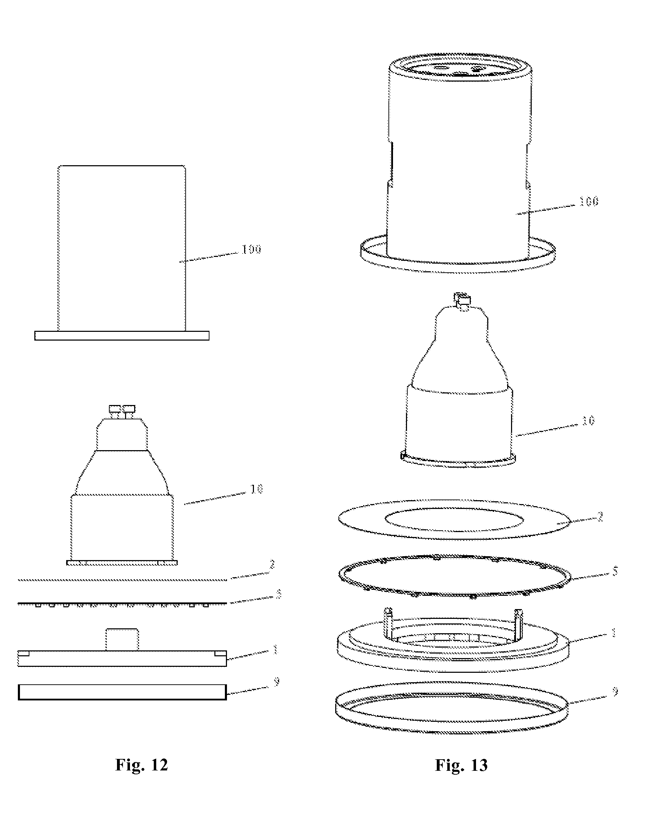

Referring to Figs. 12 and 13, in this embodiment, the auxiliary light source 5 is embedded at the outer side of the light guiding layer 1. The light shading piece 9 has an annular structure with an outward folded edge which encloses the outer side of the annular light guiding layer 1. The light shading piece 9 shelters the LED circuit board of the auxiliary light source 5 from two directions, i.e. the outer side and the outer surface of the light guiding layer 1, such that the light fixture is more beautiful and the light rays are more even and softer.

The auxiliary light source may use one or two or more LED lamps or general illumination lamps, and may be mounted on the front surface and/or back surface and/or outer side and/or inner side of the light fixture panel. In this embodiment, a group of LEDs is used as the auxiliary light source and arranged on the inner side of the light fixture panel and in annular manner around the primary light source 10, as shown in Figs. 1 and 4. The reflective layer 2, the light guiding layer 1, the diffusion layer 3 and the light collecting layer 4 are arranged on the panel successively. The light rays of the LED lamp pass through the light guiding layer 1, the reflective layer 2, the diffusion layer 3 and the light collecting layer 4, and emitted from the front of the light fixture. In this way, the light rays are even, soft and simple. Furthermore, a decorative layer such as glass, crystal and colored glaze layer may be further provided outside the light fixture panel to make the light fixture more beautiful.

If desired, multiple groups of auxiliary light sources can be utilized, and the auxiliary light sources may have different colors to obtain a light fixture with diversified and aesthetic appearance. Under the consideration of the illumination change and the appearance design, the light guiding layer may be further provided partially on the light fixture panel, for example, the light guiding layer is only provided at the inner circle of the light fixture to form the annular lighting effect besides the primary illumination. The light fixture panel may be partially provided with transparent materials, and another portion of the panel is covered by light shading materials, for example, the outer circle of the light fixture panel is made of transparent materials such as acrylic material and glass, while the inner circle is made of opaque materials, such that an annular spacing is formed between the primary illumination and the auxiliary illumination.

The use state of the recessed light fixture with auxiliary illumination is shown in Fig. 5. The primary light source 10 is surrounded by the auxiliary light sources 5. The auxiliary light sources are mounted on the lamp face and outside the ceiling. The user may turn on or off the primary illumination and/or auxiliary illumination freely as desired. The recessed light fixture may be further provided with a fireproof cover to provide safe and fireproof use.

It should be emphasized that the above-described embodiments of the present invention, particularly, any preferred embodiments, are merely possible examples of implementations, merely set forth for a clear understanding of the principles of the invention. Many variations and modifications may be made to the above-described embodiment(s) of the invention without departing substantially from the spirit and principles of the invention.

## Claims

1. A recessed light fixture with auxiliary illumination, comprising a primary light source and at least one auxiliary light source, **characterized in that** the light fixture further comprises a light guiding layer made of transparent materials, the light guiding layer is provided with a first surface and a second surface which are opposite; light adjusting net points are provided on the first surface of the light guiding layer; the auxiliary light source is provided on at least one side of the light guiding layer; the light emitted from the auxiliary light source is radiated towards the light guiding layer.

2. The recessed light fixture of claim 1, **characterized in that** the light guiding layer is mounted on the light fixture panel, and the auxiliary light source is arranged around the primary light source.

3. The recessed light fixture of claim 2, **characterized in that** the auxiliary light source is arranged outside the primary light source in square or circular or annular manner.

4. The recessed light fixture of claim 3, **characterized in that** the auxiliary light source is mounted on the front surface and/or back surface and/or outer side and/or inner side of the light fixture panel.

5. The recessed light fixture of claim 4, **characterized in that** a reflective film or a light shading film is provided on the side of the light guiding layer.

6. The recessed light fixture of claim 1, **characterized in that** the auxiliary light source uses one or two or more LED lamps or energy saving lamps or general illumination lamps.

7. The recessed light fixture according to any one of claims 1 to 6, **characterized in that** the light fixture futher comprises a reflective layer, the reflective layer is provided outside the first surface of the light guiding layer.

8. The recessed light fixture of claim 7, **characterized in that** the light fixture futher comprises a diffusion layer, the diffusion layer is provided outside the second surface of the light guiding layer.

9. The recessed light fixture of claim 8, **characterized in that** the light fixture futher comprises a light collecting layer, the light collecting layer is provided outside the diffusion layer.

10. The recessed light fixture of claim 9, **characterized in that** a light reflector is further provided outside the auxiliary light source, the light reflector has an opening facing the light guiding layer.

11. The recessed light fixture of claim 10, **characterized in that** reflective films or light shading films are provided on the sides of the light guiding layer, the diffusion layer and the light collecting layer.

12. The recessed light fixture according to any one of claims 1 to 6, **characterized in that** a light shading structure is provided outside the auxiliary light source.

13. The recessed light fixture according to any one of claims 1 to 6, **characterized in that** light adjusting net points are provided on the first surface of the light guiding layer by etching.

14. The recessed light fixture according to any one of claims 1 to 6, **characterized in that** the light adjusting net points are formed on the first surface of the light guiding layer by ink printing.

15. The recessed light fixture according to any one of claims 1 to 6, **characterized in that** the light adjusting net points are formed on the first surface of the light guiding layer by laser engraving.

16. The recessed light fixture according to any one of claims 1 to 6, **characterized in that** the light guiding layer is made of PC, polymethyl methacrylate, glass, crystal and other transparent plastics.

17. The recessed light fixture according to any one of claims 1 to 6, **characterized in that** the light guiding layer is a square layer or sectorial layer or annular layer.

18. The recessed light fixture according to any one of claims 1 to 6, **characterized in that** a decorative layer made of polymethyl methacrylate, glass, crystal or colored glaze is provided on the outmost layer of the light emergent surface of the auxiliary light source.

19. The recessed light fixture according to any one of claims 1 to 6, **characterized in that** the area of the light adjusting net point increases as the distance thereof from the auxiliary light source increases.

20. The recessed light fixture of claim 12, **characterized in that** the light shading structure has an annular structure with an outward folded edge, and the light shading structure shelters the auxiliary light source from the outer side and the outer surface of the light guiding layer.

21. The recessed light fixture of claim 12, **characterized in that** the light shading structure has an annular structure with an inward folded edge, the light shading structure shelters the auxiliary light source from the inner side and the outer surface of the light guiding layer.
